# EUROPEAN PATENT APPLICATION

(11) **EP 2 484 518 A1**
(43) Date of publication of application: **08.08.2012**
(21) Application number: 10820385.2
(22) Date of filing: 17.09.2010
(51) Int. Cl.: B32B 27/00, B32B 5/18, B32B 27/12, B32B 27/20, B32B 27/32, B32B 27/36

(54) **RESIN LAMINATED PLATE**

(30) Priority: 29.09.2009 JP 2009224785; 30.10.2009 JP 2009250036; 19.03.2010 JP 2010064190; 08.09.2010 JP 2010200950
(71) Applicant: Sekisui Chemical Co., Ltd., Osaka 530-8565 (JP)
(72) Inventor: TAKAHASHI, Katsunori, Mishima-gun Osaka 618-8589 (JP); MUKOHATA, Daisuke, Mishima-gun Osaka 618-8589 (JP); NARUTA, Mitsuru, Mishima-gun Osaka 618-8589 (JP); TSUMURA, Kensuke, Mishima-gun Osaka 618-8589 (JP); SAWA, Kazuhiro, Mishima-gun Osaka 618-8589 (JP); TANIGUCHI, Koji, Mishima-gun Osaka 618-8589 (JP); NAGATANI, Naoyuki, Mishima-gun Osaka 618-8589 (JP)
(74) Representative: TER MEER - STEINMEISTER & PARTNER GbR
(86) International application number: PCT/JP2010/066170
(87) International publication number: WO 2011/040266

(57) **Abstract**

Provided is a resin laminated plate which can achieve weight reduction and further increase in strength and is less likely to degrade in surface appearance. A resin laminated plate 1 including a layer made of a thermoplastic resin or thermosetting resin in a laminated structure includes: a first layer 2 made of a thermoplastic resin or thermosetting resin having a tensile modulus of elasticity of 0.8 to 2.0 GPa; and a second layer 3 disposed on the first layer 2, made of a different resin from the thermoplastic resin or thermosetting resin forming the first layer 2, and having a form selected from the group consisting of a film, a woven fabric, a non-woven fabric, and a mesh, wherein the ratio between the thickness of the first layer and the thickness of the second layer is within the range of 0.5 to 10 and the apparent bending modulus of elasticity of the resin laminated plate determined by the bending test defined in Japanese Industrial Standards (JIS) K7171 is 2.5 GPa to 8.5 GPa, both inclusive.

## Description

### Technical Field

This invention relates to resin laminated plates including a layer made of a thermoplastic resin or a thermosetting resin and more particularly relates to a resin laminated plate that can satisfy both of increase in strength and weight reduction.

### Background Art

For vehicle exteriors or the like, outer panels made of resin are being used for the purpose of weight reduction. However, they present a problem in that resin has low strength as compared to metal.

Generally, in order to give a resin laminated plate sufficient strength, its thickness has to be increased. However, if its thickness is increased, its weight is also increased, which makes it impossible to achieve weight reduction. Therefore, for example, a structure is widely used in which a thermoplastic resin contains glass fibers dispersed thereinto as a reinforcing filler for increasing the mechanical strength. In such a case where glass fibers or the like are dispersed into the resin, a problem arises in that the surface texture of the resin is degraded.

To cope with the above problem, Patent Literature 1 listed below discloses a resin-made, vehicle outer panel in which a skin film is disposed on one surface of a resin base material formed of a polypropylene-based resin foam into which glass fibers serving as reinforcing fibers are dispersed. In this resin-made, vehicle outer panel, the surface layer of the polypropylene-based resin foam into which glass fibers are dispersed is not foamed but is a skin layer, and an inner portion thereof consisting of the polypropylene-based resin foam is surrounded by the skin layer. The literature describes that since a major part of the resin base material is composed of the above portion consisting of the polypropylene-based resin foam into which glass fibers are dispersed, the vehicle outer panel can achieve weight reduction and has sufficient rigidity. Furthermore, the skin film layer includes a resin film layer applied to the resin base material and a metal-evaporated layer provided on the surface of the resin film layer. The literature describes that since the metal-evaporated layer gives a metallic texture to the surface of the skin film layer, the surface appearance can be improved.

### Citation List

### Patent Literature

Patent Literature 1: JP-4028699

### Summary of Invention

### Technical Problem

In the resin-made, vehicle outer panel described in Patent Literature 1, since the surface is formed by applying the skin film layer to the resin base material, the glass fibers are less likely to appear on the surface, so that the surface appearance is improved.

The above resin-made, vehicle outer panel, however, although achieving weight reduction and increase in strength to some extent, does not yet have sufficient rigidity. Therefore, there is demand for further increasing the strength. In addition, the obtained resin-made, vehicle outer panel presents the problem of relatively large dimensional variations due to temperature changes.

An object of the present invention is, in view of the above-described situation of the conventional art, to provide a resin laminated plate which can achieve both of weight reduction and further increase in strength and is less likely to degrade in surface appearance.

### Solution to Problem

Provided is a resin laminated plate including a layer made of a thermoplastic resin or thermosetting resin in a laminated structure, the resin laminated plate including: a first layer made of a thermoplastic resin or thermosetting resin having a tensile modulus of elasticity of 0.8 to 2.0 GPa; and a second layer disposed on the first layer, made of a different resin from the thermoplastic resin or thermosetting resin forming the first layer, and having a form selected from the group consisting of a film, a woven fabric, a non-woven fabric, and a mesh, wherein the ratio between the thickness of the first layer and the thickness of the second layer is within the range of 0.5 to 10 and the apparent bending modulus of elasticity of the resin laminated plate determined by the bending test defined in Japanese Industrial Standards (JIS) K7171 is 2.5 GPa to 8.5 GPa, both inclusive.

In a particular aspect of the resin laminated plate according to the present invention, the second layer is disposed on each side of the first layer and the thickness of the second layer is the total thickness of the second layers located on both sides of the first layer. In this case, since the second layer is located on each side, the need for orientation of the resin laminated plate in use can be eliminated even when the aesthetic quality of the surface appearance is desired to be improved by the second layer. In addition, in selecting the materials forming the first and second layers and their thicknesses to give an apparent bending modulus of elasticity of 2.5 GPa to 8.5 GPa, the design flexibility can be increased.

In relation to the ratio between the thickness of the first layer and the thickness of the second layer, when a plurality of second layers are provided as described above, the thickness of the second layer refers to the total thickness of the plurality of second layers. Likewise, when the resin laminated plate according to the present invention includes a plurality of first layers, the above thickness of the first layer refers to the total thickness of the plurality of first layers.

In another particular aspect of the present invention, the ratio between the thickness of the first layer and the thickness of the second layer is within the range of 0.5 to 7.5 and the apparent bending modulus of elasticity of the resin laminated plate is 3.0 GPa or more. In this case, the strength of the laminated plate can be further increased. More preferably, the ratio between the thickness of the first layer and the thickness of the second layer is within the range of 0.5 to 5 and the apparent bending modulus of elasticity is 3. 5 GPa or more.

In still another particular aspect of the resin laminated plate according to the present invention, the ratio between the thickness of the first layer and the thickness of the second layer is within the range of 0.5 to 5 and the resin laminated plate has a linear expansion coefficient of 5×10⁻⁵/K or less. In this case, dimensional variations due to temperature changes can be reduced.

In the resin laminated plate of the present invention, although no particular limitation is placed on the type of the above thermoplastic resin, the preferred thermoplastic resin that can be used is polyolefin or polyamide. Because polyolefin or polyamide is a general-purpose resin and is available at low cost, the cost of the resin laminated plate can be reduced.

In still another aspect of the resin laminated plate according to the present invention, the first layer has a foamed structure. In this case, the resin laminated plate can be further reduced in weight.

The thermoplastic resin forming the second layer may contain a graphite compound as a reinforcing filler. Preferably, the graphite compound has a graphene sheet structure. Examples of such a carbon compound having a graphene sheet structure include graphene, carbon nanotube, graphite, and their aggregates. Preferably, the graphite compound is a flake graphite formed of a laminate of graphene, the number of layers thereof is 150 or less, and the aspect ratio thereof is 20 or more. In this case, since the graphite compound is extremely small, the mechanical strength can be further increased without impairment in surface appearance.

However, the thermoplastic resin forming the second layer should preferably contain no filler for reinforcement. Therefore, no reinforcing filler appears on the surface of the second layer, which further improves the surface appearance.

In still another particular aspect of the resin laminated plate according to the present invention, the second layer is formed of a film having a tensile modulus of elasticity of 7.0 GPa to 11 GPa, both inclusive. In this case, the mechanical strength of the resin laminated plate can be further increased.

In still another particular aspect of the resin laminated plate according to the present invention, the linear expansion coefficient of the second layer is 2×10⁻⁵/K or less. In this case, the dimensional stability of the resin laminated plate when undergoing a temperature change can be further increased.

In still another particular aspect of the resin laminated plate according to the present invention, the second layer is formed of a drawn polyethylene terephthalate film. In this case, the mechanical strength and dimensional stability of the resin laminated plate can be further increased.

In still another particular aspect of the resin laminated plate according to the present invention, one of the second layers disposed on both sides of the first layer is formed of a drawn film made of a thermoplastic resin and the other second layer is formed of a mesh made of a thermoplastic resin. In this case, the mechanical strength of the resin laminated plate can be further increased. The mesh is preferably a thermoplastic resin mesh in which a first flat yarn row composed of a plurality of first flat yarns extending in a drawing direction of the drawn film and a second flat yarn row composed of a plurality of second flat yarns extending in a direction intersecting with the direction of extension of the first flat yarns are disposed one on another. More preferably, the first and second flat yarn rows are made of a drawn thermoplastic resin. Still more preferably, the drawn film and the first and second flat yarn rows are made of drawn polyethylene terephthalate.

### Advantageous Effects of Invention

The resin laminated plate according to the present invention has a structure in which the second layer is disposed on each side of the first layer made of the thermoplastic resin or thermosetting resin, wherein the ratio between the thickness of the first layer and the thickness of the second layer is within the range of 0.5 to 10 and the apparent bending modulus of elasticity of the resin laminated plate determined by the bending test defined in JIS K7171 is 2.5 GPa or more. Therefore, the resin laminated plate can have sufficient bending strength without large increase in thickness, which enables the resin laminated plate to satisfy both of increase in mechanical strength and weight reduction.

### Brief Description of Drawings

[Fig. 1] Fig. 1 is a cross-sectional front view of a resin laminated plate according to a first embodiment of the present invention.
[Fig. 2] Fig. 2 is a cross-sectional front view showing an example of a formed product of the resin laminated plate according to the first embodiment of the present invention.
[Fig. 3] Fig. 3 is a cross-sectional front view showing a resin laminated plate according to a second embodiment of the present invention.
[Fig. 4] Fig. 4 is a partly cutaway plan view showing an example of a mesh used as a second layer in the present invention.
[Fig. 5] Fig. 5 is a partly cutaway plan view showing another example of a mesh used as a second layer in the present invention.

### Description of Embodiments

Hereinafter, a description will be given of details of a resin laminated plate according to the present invention and resin laminate plates according to specific embodiments of the present invention with reference to the drawings.

### (First Layer)

A resin laminated plate according to the present invention includes a first layer made of a thermoplastic resin or thermosetting resin having a tensile modulus of elasticity of 0.8 to 2.0 GPa. Second layers to be described later are disposed on both sides of the first layer. In this structure, since the tensile modulus of elasticity of the first layer located in the middle of the structure is within the range of 0.8 to 2.0 GPa, the tensile modulus of elasticity of the entire resin laminated plate can be sufficiently increased, so that the mechanical strength of the resin laminated plate can be increased. If the tensile modulus of elasticity is below 0. 8 GPa, the tensile modulus of elasticity of the entire resin laminated plate will not be able to be sufficiently increased. The preferred lower limit of the tensile modulus of elasticity is 1.0 GPa. When the tensile modulus of elasticity is not less than 1.3 GPa, the mechanical strength of the resin laminated plate can be further increased. Resins having a tensile modulus of elasticity of above 2.0 GPa are generally difficult to obtain except for those reinforced by glass fibers or the like.

No particular limitation is placed on the type of the thermoplastic resin having a tensile modulus of elasticity of 0.8 to 2.0 GPa, and any appropriate thermoplastic resins satisfying the above tensile modulus of elasticity range can be used. Examples of such a thermoplastic resin include polyolefin, polyamide, polyester, and polycarbonate. Polyolefin or polyamide is preferably used, because they include many resins satisfying the above tensile modulus of elasticity range and they are widely used and therefore easily available and inexpensive. No particular limitation is placed on the type of polyolefin for use; examples of polyolefin that can be used include polypropylene and polyethylene. Examples of polyamide that can be used include polyamide 66, polyamide 6, and polyamide 11.

The thermoplastic resin forming the first layer may contain other components than the above thermoplastic resin, including, for example, a plasticizer, an inorganic filler, and other additives. Examples of such a plasticizer that can be used are known plasticizers, including carnauba wax and low molecular weight polyolefin. Examples of the above inorganic filler include carbon black and talc. Furthermore, the thermoplastic resin forming the first layer may contain a reinforcing filler, such as glass fibers, in order to increase the mechanical strength but should preferably contain no reinforcing filler. If the first layer contains the reinforcing filler, the reinforcing filler may protrude from the surface of the first layer to reach the second layer, which may impair the surface appearance quality of the resin laminated plate.

In the present invention, the first layer may have a foamed structure or may not have a foamed structure. The first layer having a foamed structure can be obtained by foam molding the thermoplastic resin forming the first layer by one of known foam molding methods. The specific gravity of such a first layer having a foamed structure is not particularly limited but is preferably within the range of 50 to 1000 kg/m³. When the specific gravity is within the above range, the resin laminated plate can be further reduced in weight by the provision of the foamed structure. In addition, the first layer becomes less likely to buckle, which allows the resin laminated plate to more easily satisfy the range of apparent bending moduli of elasticity defined in the present invention. No particular limitation is placed on the cell size in the foamed structure, but the preferred cell size is 500 µm or less. When the cell size is 500 µm or less, weak local portions are less likely to be formed in the foamed structure, so that the first layer becomes less likely to buckle. Thus, it becomes easy to from the first layer so that the resin laminated plate can satisfy the range of apparent bending moduli of elasticity defined in the present invention.

As described previously, the first layer may not have a foamed structure. In this case, the first layer can be increased in strength and is less likely to buckle, so that the resin laminated plate can be easily formed to satisfy the range of apparent bending moduli of elasticity defined in the present invention.

### (Second Layer)

The second layers in the resin laminated plate according to the present invention are disposed on the first layer and made of a different resin from the thermoplastic resin forming the first layer, and the second layers have a form selected from the group consisting of a film, a woven fabric, a non-woven fabric, and a mesh. No particular limitation is placed on the type of the resin forming the second layers so long as it is a resin different from the thermoplastic resin forming the first layer. However, the resin forming the second layers must be a resin that enables the later-described apparent bending modulus of elasticity of the resin laminated plate of the present invention obtained by disposing the second layers on both sides of the first layer to fall within a later-described specific range. Specifically, it is only necessary to select a combination of the thermoplastic resin forming the first layer and the resin forming the second layer so that the first and second layers can cooperate to achieve the specific range of apparent bending moduli of elasticity.

Examples of resins that can form the second layer include polyester, polyolefin, polyamide, and polyimide. Drawn polyethylene terephthalate film is preferably used as a thermoplastic resin forming the second layer. In this case, the resin can be increased in orientation characteristic by drawing, so that the mechanical strength can be further increased.

The resin forming the second layers may also contain an appropriate plasticizer, inorganic filler, or the like without interfering with the object of the present invention.

The second layer has a form selected from the group consisting of a film, a woven fabric, a non-woven fabric, and a mesh. It is necessary that at least one of the outside surfaces of the resin laminated plate of the present invention should be a second layer. Since thus the above outside surface of the resin laminated plate is a second layer, it is a film surface, a woven fabric surface, or a non-woven fabric surface, so that the surface appearance of the resin laminated plate can be aesthetically improved. The preferred form is a film, woven fabric or non-woven fabric having no opening because it can further improve the surface appearance.

Also for such a thermoplastic resin forming a mesh, any appropriate one of the above thermoplastic resins that can form the second layer can be used.

The mesh preferably has a structure in which a first flat yarn row composed of a plurality of first flat yarns extending in a drawing direction of the drawn film and a second flat yarn row composed of a plurality of second flat yarns extending in a direction intersecting with the direction of extension of the first flat yarns are disposed one on another. In this case, since the direction of extension of the plurality of first flat yarns intersects with the direction of extension of the plurality of second flat yarns, the anisotropy of the mechanical strength can be more reliably reduced. The first and second flat yarn rows are more preferably made of a drawn thermoplastic resin and still more preferably made of drawn polyethylene terephthalate. In this case, the anisotropy of the mechanical strength can be more effectively reduced.

Most preferably, the second layer disposed on one side of the first layer is formed of a drawn polyethylene terephthalate film, the second layer disposed on the other side of the first layer has a structure in which the first and second flat yarn rows are disposed one on another, and the first and second flat yarn rows are made of drawn polyethylene terephthalate. In this case, the mechanical strength of the resin laminated plate can be still further increased and the anisotropy of the mechanical strength can be more effectively reduced.

The tensile modulus of elasticity of the second layer is preferably 7.0 GPa to 11 GPa, both inclusive. If the tensile modulus of elasticity is below 7.0 GPa, the mechanical strength of the entire resin laminated plate may not be able to be increased. If the tensile modulus of elasticity is above 11 GPa, failure during forming may occur, such as delamination of the laminate. Furthermore, the linear expansion coefficient of the second layer is preferably 2x10⁻⁵/K or less. In this case, the dimensional stability of the resin laminated plate when undergoing a temperature change can be increased.

### (Embodiments of Resin Laminated Plate)

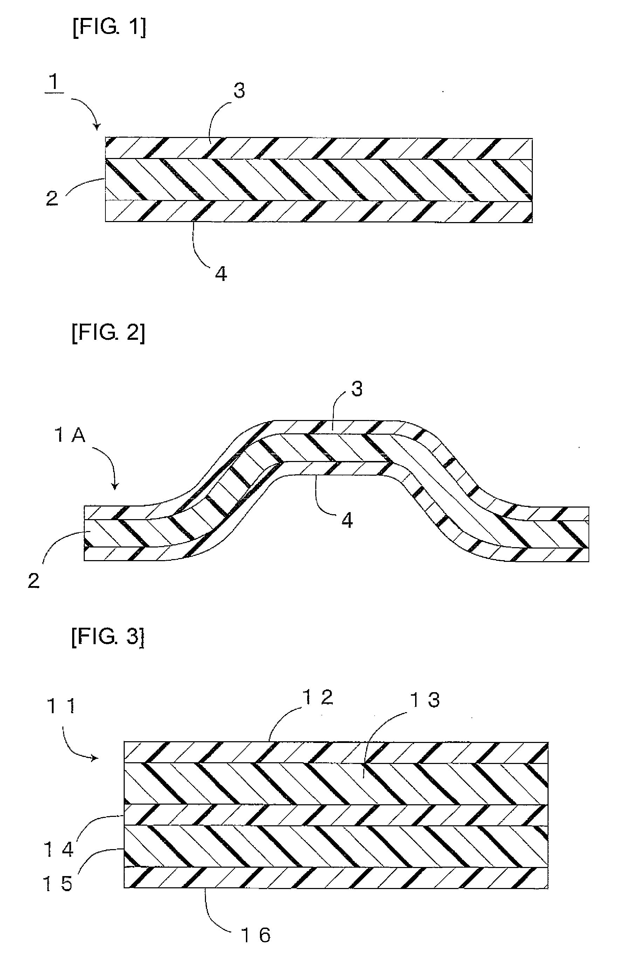

A resin laminated plate 1 of a first embodiment shown in Fig. 1 is a laminate having a three-layered structure in which a second layer 3 is disposed on each side of a first layer 2. However, in the present invention, no particular limitation is placed on the laminated structure of the resin laminated plate so long as the second layer is disposed on the first layer. Therefore, the second layer may be disposed only one side of the first layer. In this case, a third layer made of a different material may be further disposed on the outside of the first layer.

In a resin laminated plate 11 of a second embodiment shown in Fig. 3, a second layer 12, a first layer 13, a second layer 14, a first layer 15, and a second layer 16 are stacked in this order from the top. In this manner, the resin laminated plate of the present invention may be a laminate having a five-layered structure.

Furthermore, the resin laminated plate is not limited to the three-layered or five-layered structure and may be a laminate in which a larger number of first and/or second layers are stacked.

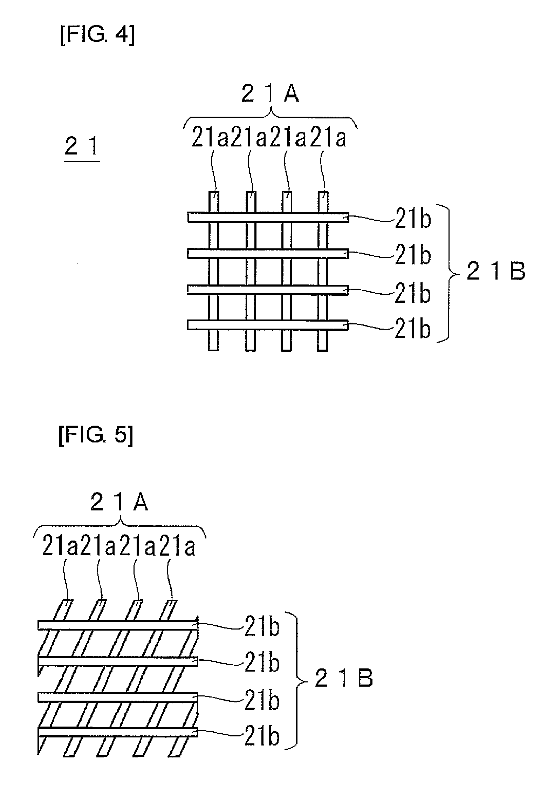

As described previously, it is preferred that in the structure in which second layers are disposed on both sides of the first layer, one of the second layers is formed of a drawn film made of a thermoplastic resin and the other is formed of a mesh made of a thermoplastic resin. Examples of mesh forms of such kind will now be described with reference to Figs. 4 and 5.

In a mesh 21 shown in Fig. 4, a second flat yarn row 21B is disposed on a first flat yarn row 21A. The first flat yarn row 21A has a plurality of first flat yarns 21a. The plurality of first flat yarns 21a are spaced apart at predetermined intervals and in parallel with each other. Likewise, the second flat yarn row 21B has a plurality of second flat yarns 21b arranged in parallel with each other and at predetermined intervals.

In this structural example, the first flat yarns 21a intersect with the second flat yarns 21b in directions orthogonal to each other.

When the above mesh 21 is used as a second layer, the difference in direction of extension between the flat yarns 21a and the flat yarns 21b, particularly the orthogonality therebetween, enables effective reduction of the anisotropy of the mechanical strength of the resin laminated plate.

As in a structural example shown in Fig. 5, the direction of extension of the first flat yarns 21a and the direction of extension of the second flat yarns 21b may intersect not orthogonally but obliquely to each other.

No particular limitation is placed on the method for stacking and integrating the first flat yarn row 21A and the second flat yarn row 21B, and any appropriate method can be used, such as a method in which the first flat yarn row 21A made of a thermoplastic resin is fused to the second flat yarn row 21B made of a thermoplastic resin or a method in which, while the first and second flat yarn rows 21A and 21B are molded from a thermoplastic resin, they are disposed one on another and bonded before being solidified.

The mesh is not limited to the above structures shown in Figs. 4 and 5; any mesh having an appropriate structure can be used so long as it can reduce the anisotropy of the mechanical strength. Specifically, the mesh is not limited to the structures in which the first and second flat yarn rows 21A and 21B are disposed one on another, and a mesh formed by knitting a plurality of first flat yarns and a plurality of second flat yarns may be used.

### (Thickness Ratio and Apparent Bending Modulus of Elasticity)

In the resin laminated plate according to the present invention, the ratio t₁/t₂ between the thickness t₁ of the first layer and the thickness t₂ of the second layer is within the range of 0.5 to 10 and the apparent bending modulus of elasticity of the resin laminated plate determined by the bending test defined in JIS K7171 is 2.5 GPa to 8.5 GPa, both inclusive. Note that when the first layer comprises a plurality of layers, the total thickness of the plurality of first layers is assumed to be the thickness t₁ of the first layer. Likewise, when the second layer in the resin laminated plate comprises a plurality of layers, the above thickness t₂ of the second layer refers to the total thickness of the plurality of second layers. If the thickness ratio t₁/t₂ is below 0.5, the thickness t₁ of the first layer will be too thin, so that sufficient moldability and formability will not be able to be obtained. If the thickness ratio t₁/t₂ is above 10, the thickness t₂ of the second layer will be too thin, so that the mechanical strength of the resin laminated plate will be low. Furthermore, since the above apparent bending modulus of elasticity is not less than 2.5 GPa, the resin laminated plate according to the present invention has sufficient mechanical strength and therefore can be used suitably for applications requiring mechanical strength, such as a vehicle outer panel, for example.

The upper limit of the apparent bending modulus of elasticity is not particularly limited in increasing the mechanical strength. However, because the apparent bending modulus of elasticity of a resin laminated plate of this kind generally does not exceed 8.5 GPa so long as existing materials are used therein, the apparent bending modulus of elasticity is not more than 8.5 GPa.

Preferably, the ratio t₁/t₂ between the thickness t₁ of the first layer and the thickness t₂ of the second layer is within the range of 0.5 to 7.5 and the apparent bending modulus of elasticity of the resin laminated plate is 3.0 GPa or more. In this case, the mechanical strength of the resin laminated plate can be further increased. More preferably, the above thickness ratio is within the range of 0.5 to 5 and the above apparent bending modulus of elasticity is 3.0 GPa or more. Thus, the mechanical strength can be still further increased. Furthermore, preferably, the above thickness ratio is within the range of 0.5 to 5 and the resin laminated plate has a linear expansion coefficient of 5×10⁻⁵/K or less. In this case, the dimensional stability of the resin laminated plate when undergoing a temperature change can be increased.

### (Production Method)

The resin laminated plate according to the present invention is not particularly limited so long as it can have a laminated structure in which a second layer is disposed on a first layer. For example, a method that can be suitably used is one in which a film, woven fabric, or non-woven fabric forming the second layer is thermally fused to a resin layer forming the first layer. Alternatively, the resin laminated plate may be obtained by coextruding the first layer and the second layer.

### (Reinforcing Filler)

Generally, thermoplastic resin molded products, thermoplastic resin laminates, and the like commonly contain, for the purpose of increasing the mechanical strength, a fibrous reinforcing material, such as glass fibers or carbon fibers, or other reinforcing fillers, such as calcium carbonate. However, with the use of such a reinforcing filler, irregularities resulting from the reinforcing filler may be formed on the outside surface to impair the aesthetic quality of the surface appearance. Therefore, in the resin laminated plate according to the present invention, it is preferred that the second layer located on the surface side should not contain such a reinforcing filler as described above. More preferably, the first layer also should contain no reinforcing filler. In the present invention, since, even without the use of reinforcing filler, the ratio between the thickness t₁ of the first layer and the thickness t₂ of the second layer is within the above specific range and the apparent bending modulus of elasticity of the resin laminated plate is 2. 5 GPa to 8. 5 GPa, both inclusive, the strength can be increased without impairment in surface appearance.

However, in some cases, the second layer may contain glass fibers, a graphite compound, or the like as a reinforcing filler. When the second layer contains a reinforcing filler, the mechanical strength of the resin laminate can be further increased. An example of a material suitable for use as a reinforcing filler contained in the second layer is a graphite compound having a graphene sheet structure because of difficulty in forming irregularities on the outside surface.

Examples of the graphite compound having a graphene sheet structure include graphene, carbon nanotube, graphite, and their aggregates.

Furthermore, the graphite compound is preferably a flake graphite formed of a laminate of graphene sheets. When the graphite compound is in the form of sufficiently small flakes, irregularities are still less likely to be formed on the outside surface of the second layer. Particularly preferred is a flake graphite compound in which the number of layers of the laminate is 150 or less and the aspect ratio of the laminate is 20 or more. If the number of layers of the laminate is above 150, irregularities may be formed on the outside surface of the second layer. Also if the aspect ratio of the laminate is below 20, irregularities may be formed on the outside surface of the second layer.

The content of the graphite compound in the second layer is preferably 1% to 16% by weight and more preferably 5% to 40% by weight. If the content of the graphite compound is too small, the mechanical strength of the resin laminate may not be able to be increased. If the content of the graphite compound is too large, failure during forming may occur, such as delamination of the laminate.

### (Examples and Comparative Examples)

Hereinafter, the effects of the present invention will be demonstrated by way of specific examples and comparative examples.

### (Example 1)

A resin laminated plate having a three-layered structure was obtained by thermally fusing second layers to both sides of a first layer. More specifically, a resin laminated plate was obtained by thermally fusing to both sides of a 1.0 mm thick polypropylene resin layer (polypropylene manufactured by Prime Polymer Co., Ltd., product No. J-721GR, tensile modulus of elasticity: 1.2 GPa, linear expansion coefficient: 0.5×10⁻⁵/K) 0.2 mm thick ultradrawn polyethylene terephthalate films (manufactured by SEKISUI CHEMICAL CO. , LTD., tensile modulus of elasticity: 9 GPa, linear expansion coefficient: 0.5×10⁻⁵/K) as second layers at a temperature of 270°C.

The tensile modulus of elasticity of the first layer and the ratio t₁/t₂ between the thickness t₁ of the first layer and the thickness t₂ of the second layer in this resin laminated plate are shown in Table 1 below. In addition, the apparent bending modulus of elasticity of the obtained resin laminated plate determined by the bending test defined in JIS K7171 and the linear expansion coefficient thereof are also shown in Table 1 below. The apparent bending modulus of elasticity was obtained by determining the bending modulus of elasticity of the resin laminated plate in the drawing direction of the second layer and the bending modulus of elasticity thereof in the direction perpendicular to the drawing direction and calculating the average of these bending moduli of elasticity. Table 1 below collectively shows the obtained apparent bending modulus of elasticity, the bending modulus of elasticity in the drawing direction, the bending modulus of elasticity in the direction perpendicular to the drawing direction, the ratio of the bending modulus of elasticity in the drawing direction to the bending modulus of elasticity in the perpendicular direction, and the linear expansion coefficient.

### (Example 2)

A resin laminated plate was obtained in the same manner as in Example 1 except that the thickness ratio between the first layer and the second layer was changed from 2 . 5 to 4. The apparent bending modulus of elasticity of this resin laminated plate was 4. 1 GPa and the linear expansion coefficient thereof was 3x10⁻⁵/K.

### (Example 3)

A resin laminated plate was obtained in the same manner as in Example 1 except that the thickness ratio between the first layer and the second layer was changed from 2.5 to 6. The apparent bending modulus of elasticity of this resin laminated plate was 3. 6 GPa and the linear expansion coefficient thereof was 3x10⁻⁵/K.

### (Example 4)

A resin laminated plate was obtained in the same manner as in Example 1 except that polypropylene (manufactured by Prime Polymer Co., Ltd., product No. J-2003GP, tensile modulus of elasticity: 1.8 GPa) was used as a resin forming the first layer. The apparent bending modulus of elasticity of this resin laminated plate was 4. 6 GPa and the linear expansion coefficient thereof was 2x10⁻⁵/K.

### (Example 5)

A resin laminated plate was obtained in the same manner as in Example 4 except that the thickness ratio between the first layer and the second layer was changed from 2.5 to 4. The apparent bending modulus of elasticity of the obtained resin laminated plate was 4.4 GPa and the linear expansion coefficient thereof was 3×10⁻⁵/K.

### (Example 6)

A resin laminated plate was obtained in the same manner as in Example 4 except that the thickness ratio between the first layer and the second layer was changed from 2.5 to 6. The apparent bending modulus of elasticity of the obtained resin laminated plate was 4 GPa and the linear expansion coefficient thereof was 3×10⁻⁵/K.

### (Example 7)

A resin laminated plate was obtained by using the same first layer as in Example 1, thermally fusing to one side of the first layer a second layer formed of the same 0.2 mm thick ultradrawn polyethylene terephthalate as used in Example 1 in the same manner as in Example 1, and likewise thermally fusing to the opposite side of the first layer a mesh to be described below at a temperature of 270°C.

The prepared mesh was a mesh in which first and second flat yarn rows made of the same ultradrawn polyethylene terephthalate film as used in Example 1 were disposed one on another. The shape of the first flat yarns and second flat yarns was an elongated strip, the lengthwise direction thereof was the drawing direction, the width thereof was 3 mm, and the thickness thereof was 0.2 mm. Each of the pitches of the first flat yarns and second flat yarns was 6 mm.

The apparent bending modulus of elasticity of the obtained resin laminated plate was 4.5 GPa and the linear expansion coefficient thereof was 2×10⁻⁵/K.

### (Example 8)

Two sheets of the same ultradrawn polyethylene terephthalate film as used in Example 1 were laid in a molding die. Poured between the two sheets of ultradrawn polyethylene terephthalate film was a casting urethane resin (manufactured by NISSIN RESIN Co., Ltd., product No. ADAPT X-2422) serving as a thermosetting resin so that the weight ratio of its base resin component (product No. X-2422AS) to its hardener component (product No. X2422B) was 100 to 150, followed by heating at a temperature of 70°C to mold a resin laminated plate.

Table 1 below shows the tensile modulus of elasticity of the first layer of the resin laminated plate obtained in Example 8, the ratio t₁/t₂ between the thickness t₁ of the first layer and the thickness t₂ of the second layer thereof, the apparent bending modulus of elasticity thereof, and the linear expansion coefficient thereof.

### (Example 9)

A resin laminated plate was molded by laying the same mesh as used in Example 7 on, instead of use of two sheets of ultradrawn polyethylene terephthalate film in Example 8, a single sheet of the ultradrawn polyethylene terephthalate film and performing the rest of the process in the same manner as in Example 8.

The apparent bending modulus of elasticity of the obtained resin laminated plate was 3.5 GPa and the linear expansion coefficient thereof was 3×10⁻⁵/K.

### (Example 10)

Prepared was a foamed resin sheet with a thickness of 1.0 mm, a specific gravity of 400 kg/m³, and a foam expansion ratio of 3 obtained by foam molding glass fiber-reinforced polypropylene (manufactured by Prime Polymer Co., Ltd., trade name: MOSTRON L-4040P, tensile modulus of elasticity: 9.0 GPa, linear expansion coefficient: 5×10⁻⁵/K, specific gravity: 1200 kg/m³) . A resin laminated plate was obtained in the same manner as in Example 1 except that this foamed sheet was used as a first layer. The apparent bending modulus of elasticity of the obtained resin laminated plate was 5.7 GPa and the linear expansion coefficient thereof was 2×10⁻⁵/K.

### (Example 11)

A resin laminated plate was obtained in the same manner as in Example 1 except that, instead of the ultradrawn PET films used in Example 1, films made of a polypropylene-based resin (EA-9 made by Japan Polypropylene Corporation, tensile modulus of elasticity: 1.6 GPa, linear expansion coefficient: 11×10⁻⁵/K) containing 20% by weight of flake graphite compound formed of a laminate of graphene sheets (manufactured by XG-Sciences, Inc., product No. XGnP―5, number of layers: 180, aspect ratio: 100) with respect to the total weight of the film were used as second layers. The apparent bending modulus of elasticity of the obtained resin laminated plate was 5.8 GPa and the linear expansion coefficient thereof was 3×10⁻⁵/K.

### (Comparative Example 1)

A resin laminated plate was obtained in the same manner as in Example 1 except that, instead of the ultradrawn PET films used in Example 1, films made of a polypropylene-based resin (manufactured by Prime Polymer Co., Ltd., product No. MOSTRON L-2040P) containing 20% by weight of glass fibers with respect to the total weight of the film were used as second layers. The apparent bending modulus of elasticity of this resin laminated plate was 2.3 GPa and the linear expansion coefficient thereof was 9×10⁻⁵/K.

### (Comparative Example 2)

A resin plate made of urethane resin was obtained in the same manner as in Example 8 except that no second layer was used.

The apparent bending modulus of elasticity of this resin plate was 0.7 GPa and the linear expansion coefficient thereof was 10×10⁻⁵/K.

### (Evaluation of Mechanical Strength and Aesthetic Quality of Surface Appearance)

The apparent bending moduli of elasticity of the resin laminated plates obtained in the above Examples and Comparative Examples are as shown in Table 1 below. It can be seen from the table that since all of the resin laminated plates have sufficient bending rigidity, they have excellent mechanical strength. In addition, it can also be seen that Examples 1 to 11 have a linear expansion coefficient of 3×10⁻⁵/K or less and therefore have excellent dimensional stability against temperature changes.

In Comparative Example 1, since the second layers contained glass fibers, irregularities resulting from the glass fibers were observed on the surfaces. Since Comparative Example 2 had no second layer, recesses and irregularities existed on a significant portion of the surface of the resin plate. Therefore, these comparative examples were poor in aesthetic quality of surface appearance. In contrast, no such irregularities were observed in Examples 1 to 11. It can therefore be seen that since Examples 1 to 11 have a second layer existing at the outermost side, they have excellent surface smoothness and therefore can increase the aesthetic quality of the surface appearance of the resin laminated plates.

Furthermore, in Examples 7 and 9, no such irregularities were observed on the surface of the laminated plate opposite to the side thereof on which a mesh was located. Therefore, when in the resin laminated plates obtained in Examples 7 and 9 the surface opposite to the side on which a mesh is disposed is used as the side exposed to the outside, the aesthetic quality of their surface appearance can be increased. In addition, since the mesh is provided, the ratio of the bending modulus of elasticity in the drawing direction to the bending modulus of elasticity in the perpendicular direction can be reduced. In other words, the anisotropy of the mechanical strength can be reduced.

Fig. 2 is a cross-sectional view of a vehicle outer panel 1A obtained by subjecting the resin laminated plate 1 shown in Fig. 1 to a bending process. Since the resin laminated plate 1 has a structure in which the first and second layers 2 and 3 are stacked, such a shape as shown can be given such as by pressing under application of heat. In addition, since in the resultant product the resin laminated plate has an apparent bending modulus of elasticity of 2.5×10⁹ Pa or more, it has sufficient mechanical strength. Therefore, sufficient mechanical strength can be achieved without large increase in thickness. Furthermore, since there is no need to use any metal plate, weight reduction can also be achieved.

**[Table 1]**

| | Ex.1 | Ex. 2 | Ex. 3 | Ex. 4 | Ex. 5 | Ex. 6 | Ex.7 | Ex. 8 | Ex. 9 | Ex.10 | Ex. 11 | Comp. Ex.1 | Comp. Ex. 2 |
|---|---|---|---|---|---|---|---|---|---|---|---|---|---|
| Tensile Modulus of Elasticity of First Layer(GPa) | 12 | 12 | 12 | 18 | 18 | 18 | 12 | 08 | 0.8 | 11 | 1.2 | 12 | 08 |
| Thickness Ratio between First Layer and Second Layer (t₁/t₂) | 25 | 40 | 60 | 25 | 40 | 6.0 | 2.5 | 5.0 | 5.0 | 25 | 2.5 | 25 | - |
| Apparent Bending Modulus of Elasticity of Resin Laminaled Plate(GPa) | 4.4 | 4.1 | 36 | 46 | 4.4 | 40 | 45 | 36 | 35 | 57 | 5.8 | 23 | 07 |
| Bending Modulus of Elasticity in Drawing Direction(GPa) | 55 | 5.2 | 46 | 56 | 5.4 | 46 | 4.8 | 46 | 37 | 57 | 58 | 23 | 07 |
| Bending Modulus of Elasticity in Perpendicular Direction(GPa) | 33 | 3.0 | 2.6 | 36 | 34 | 34 | 4.2 | 2.6 | 3.3 | 5.7 | 58 | 23 | 07 |
| Bending Modulus of Elasticity in Drawin Direction / Bending modulus of Elasticity in Perpendicular Direction | 1.7 | 17 | 1.8 | 16 | 16 | 1.4 | 1.1 | 1.8 | 11 | 10 | 10 | 10 | 10 |
| Liner Expansion Coefficient(×10⁻⁵/K) | 20 | 30 | 30 | 2.0 | 3.0 | 3.0 | 2.0 | 3.0 | 30 | 20 | 30 | 90 | 100 |

### Reference Signs List

- 1...: Resin laminated plate
- 1A...: Vehicle outer panel
- 2...: First layer
- 3...: Second layer
- 11...: Resin laminated plate
- 12...: Second layer
- 13...: First layer
- 14...: Second layer
- 15...: First layer
- 16 ...: Second layer

## Claims

1. A resin laminated plate including a layer made of a thermoplastic resin or thermosetting resin in a laminated structure, the resin laminated plate comprising:
a first layer made of a thermoplastic resin or thermosetting resin having a tensile modulus of elasticity of 0.8 to 2.0 GPa; and
a second layer disposed on the first layer, made of a different resin from the thermoplastic resin or thermosetting resin forming the first layer, and having a form selected from the group consisting of a film, a woven fabric, a non-woven fabric, and a mesh,
wherein the ratio between the thickness of the first layer and the thickness of the second layer is within the range of 0.5 to 10 and the apparent bending modulus of elasticity of the resin laminated plate determined by the bending test defined in Japanese Industrial Standards (JIS) K7171 is 2.5 GPa to 8.5 GPa, both inclusive.

2. The resin laminated plate according to claim 1, wherein the second layer is disposed on each side of the first layer and the thickness of the second layer is the total thickness of the second layers located on both sides of the first layer.

3. The resin laminated plate according to claim 1 or 2, wherein the ratio between the thickness of the first layer and the thickness of the second layer is within the range of 0.5 to 7.5 and the apparent bending modulus of elasticity of the resin laminated plate is 3.0 GPa or more.

4. The resin laminated plate according to claim 3, wherein the ratio between the thickness of the first layer and the thickness of the second layer is within the range of 0.5 to 5 and the apparent bending modulus of elasticity is 3.5 GPa or more.

5. The resin laminated plate according to any one of claims 1 to 4, wherein the ratio between the thickness of the first layer and the thickness of the second layer is within the range of 0.5 to 5 and the resin laminated plate has a linear expansion coefficient of 5x10⁻⁵/K or less.

6. The resin laminated plate according to any one of claims 1 to 5, wherein the thermoplastic resin forming the first layer is polyolefin or polyamide.

7. The resin laminated plate according to any one of claims 1 to 6, wherein the first layer has a foamed structure.

8. The resin laminated plate according to any one of claims 1 to 7, wherein the thermoplastic resin forming the second layer contains a graphite compound.

9. The resin laminated plate according to claim 8, wherein the graphite compound has a graphene sheet structure.

10. The resin laminated plate according to claim 8 or 9, wherein the graphite compound having a graphene sheet structure is formed of graphene, carbon nanotube, graphite, or an aggregate of each thereof.

11. The resin laminated plate according to any one of claims 8 to 10, wherein the graphite compound is a flake graphite formed of a laminate of graphene sheets, the number of layers thereof is 150 or less, and the aspect ratio thereof is 20 or more.

12. The resin laminated plate according to any one of claims 1 to 7, wherein the thermoplastic resin forming the second layer contains no reinforcing filler.

13. The resin laminated plate according to any one of claims 1 to 12, wherein the second layer is formed of a film having a tensile modulus of elasticity of 7.0 GPa to 11 GPa, both inclusive.

14. The resin laminated plate according to any one of claims 1 to 13, wherein the linear expansion coefficient of the second layer is 2×10⁻⁵/K or less.

15. The resin laminated plate according to any one of claims 1 to 14, wherein the second layer is formed of a drawn polyethylene terephthalate film.

16. The resin laminated plate according to claim 2, wherein one of the second layers disposed on both sides of the first layer is formed of a drawn film made of a thermoplastic resin and the other second layer is formed of a mesh made of a thermoplastic resin.

17. The resin laminated plate according to claim 16, wherein the mesh is a thermoplastic resin mesh in which a first flat yarn row composed of a plurality of first flat yarns extending in a drawing direction of the drawn film and a second flat yarn row composed of a plurality of second flat yarns extending in a direction intersecting with the direction of extension of the first flat yarns are disposed one on another.

18. The resin laminated plate according to claim 17, wherein the first and second flat yarn rows are made of a drawn thermoplastic resin.

19. The resin laminated plate according to claim 18, wherein the drawn film and the first and second flat yarn rows are made of drawn polyethylene terephthalate.
